# EUROPÄISCHE PATENTSCHRIFT

(11) **EP 3 097 829 B1**
(45) Veröffentlichungstag und Bekanntmachung des Hinweises auf die Patenterteilung: **02.03.2022**
(21) Anmeldenummer: 16167853.7
(22) Anmeldetag: 02.05.2016
(51) Int. Cl.: A47J 31/60

(54) **AUFNAHMEVORRICHTUNG, GETRÄNKEAUTOMAT MIT EINER AUFNAHMEVORRICHTUNG UND VERFAHREN ZUR LÖSBAREN FIXIERUNG EINER KARTUSCHE IN EINER DERARTIGEN AUFNAHMEVORRICHTUNG**
HOLDING DEVICE, BEVERAGE MACHINE WITH A HOLDING DEVICE AND METHOD FOR REVERSIBLY FIXING A CARTRIDGE IN SUCH A HOLDING DEVICE
DISPOSITIF DE RÉCEPTION, DISTRIBUTEUR AUTOMATIQUE DE BOISSONS COMPRENANT UN DISPOSITIF DE RÉCEPTION ET PROCÉDÉ DE FIXATION AMOVIBLE D'UNE CARTOUCHE DANS UN TEL DISPOSITIF DE RÉCEPTION

(30) Priorität: 27.05.2015 DE 102015108343
(43) Veröffentlichungstag der Anmeldung: 30.11.2016
(73) Patentinhaber: Miele & Cie. KG, 33332 Gütersloh (DE); BWT AG, 5310 Mondsee (AT)
(72) Erfinder: Wüstefeld, Michael, 59555 Lippstadt (DE); van Pels, Ulrich, 33378 Rheda-Wiedenbrück (DE); Jungclaus, Dirk, 59302 Oelde (DE); Tembaak, Jutta, 49492 Westerkappeln (DE); Quaranta, Michaela, 4020 Linz (AT); Dr. Johann, Jürgen, 69226 Nußloch (DE)

(56) Entgegenhaltungen:
- EP-A1- 2 705 783
- WO-A1-2012/035247

## Beschreibung

Die Erfindung betrifft eine Aufnahmevorrichtung, in die eine Kartusche eingesetzt wird, die für die Pflege des Strömungsleitungssystems eines mit der Kartusche ausgestatteten Getränkeautomaten erforderlich und in der ein hierfür geeignetes Pflegemittel enthalten ist. In Strömungsleitungssystemen, die auf Wasser basierende Fluide führen, besteht nämlich ein häufiges Problem darin, dass sich, über einen gewissen Zeitraum betrachtet, Teile des Strömungsleitungssystems sowie der darin enthaltenen Aggregate und Geräte zusetzen. Um dies zu verhindern, ist es bekannt, mit Entkalkungsmitteln, die auf Grund einer chemischen Reaktion in der Lage sind, Kalk zu lösen, regelmäßige Pflegevorgänge des Strömungsleitungssystems durchzuführen und dieses dadurch von den Kalkablagerungen zu befreien. Hierfür wird ein entsprechender Vorrat an Entkalkungsmittel in geeigneten Kartuschen bereitgestellt und bei einer durchzuführenden Entkalkung aus der Kartusche entnommen.

Neben der hinlänglich bekannten Problematik der Verkalkung des Strömungsleitungssystems eines Getränkeautomaten wird häufig weniger beachtet, dass Wasser führende Strömungsleitungen in Abhängigkeit der Gegebenheiten auch eine Belastung mit Keimen aufweisen oder ausbilden können. Eine Keimbildung ist insbesondere zu beobachten, wenn die Flüssigkeit über eine gewisse Zeit in dem Strömungsleitungssystem steht und/oder wenn ein thermisches Umfeld existiert, das die Keimentwicklung begünstigt. Wird ein derartiges Strömungsleitungssystem nicht regelmäßig hinreichend gereinigt und nicht ebenso regelmäßig von Ablagerungen, wie dem zuvor beschriebenen Kalk, befreit, fördert dies auch eine Verkeimung, was insbesondere bei Getränkeautomaten problematisch ist. Die damit einhergehenden Gesundheitsgefahren sind nicht zu unterschätzen und rücken zunehmend in den Fokus der Betrachtung.

Nach einem Entkalkungsvorgang wird das Strömungsleitungssystem zum Teil mehrfach mit frischem Wasser gespült und in der Regel zwischendurch noch einmal zusätzlich gereinigt, bevor es wieder seinem eigentlichen Verwendungszweck dienen kann. Zur Reinigung des Strömungsleitungssystems kommen spezielle Reinigungsmittel zum Einsatz.

Teilweise sind bereits Lösungen bekannt und im Einsatz, bei denen einem Entkalkungsmittel geeignete Entkeimungsmittel beigemischt werden, so dass während der Entkalkung gleichzeitig auch eine Entkeimung des Strömungsleitungssystems erfolgt. Andere Entkalkungsmittel weisen auch eine Keime mindernde Wirkung auf. Ein derartiges Mittel ist beispielsweise die Sorbinsäure.

Entkalkungsmittel, Entkeimungsmittel und Reinigungsmittel werden zur Vereinfachung nachfolgend einheitlich unter dem Begriff "Pflegemittel" zusammengefasst, wobei auch Mischungen der genannten Mittel unter diesen Begriff zu subsummieren sind.

Aus der EP 2 705 783 A1 ist bereits eine Kartusche bekannt, deren Gehäuse flüssigkeitsdicht durch einen Deckel verschlossen ist, der zur lösbaren Verbindung mit einer korrespondierenden Aufnahmevorrichtung ausgebildet ist. Hierzu ist an dem Deckel ein domartiger Anschlusszapfen angeformt, der in die Aufnahmevorrichtung einsetzbar und mittels einer Klemmverbindung darin gehalten ist. Je nach Befüllungsgrad der Kartusche wirkt eine dem entsprechende Gewichtskraft auf diese Klemmverbindung ein, so dass an den Verbindungsbereich zwischen Aufnahmevorrichtung und Anschlusszapfen besondere Anforderungen hinsichtlich der Abdichtung gestellt werden müssen, um Leckagen zu vermeiden, das heißt, ein Austreten des Pflegemittels aus der Kartusche beziehungsweise aus dem Dichtungsbereich. Innerhalb der Kartusche befindet sich ein Pflegemittel mit einem festen Aggregatzustand, das durch in die Kartusche eingebrachtes Wasser teilweise in Lösung übergeht, so dass zur Durchführung eines Pflegevorganges des Strömungsleitungssystems des mit der Kartusche ausgestatteten Getränkeautomaten eine Lösung eines Teils des Pflegemittels aus der Kartusche in das Strömungsleitungssystem abgegeben werden kann.

Aus der DE 10 2011 081 010 A1 geht darüber hinaus eine Aufnahmevorrichtung für eine ein Entkalkungsmittel enthaltende Einweg-Kartusche hervor. Diese Kartusche ist mit dem Getränkeautomaten über eine starre, mechanische Kopplungsvorrichtung verbunden und weist ihrerseits eine integrierte Pumpe auf, so dass der Aufbau dieser Kartusche verhältnismäßig aufwändig ist. Bei jedem Entkalkungsvorgang ist eine neue Kartusche erforderlich und muss in den Getränkeautomaten eingesetzt werden, wobei die entleerte Kartusche nach der einmaligen Durchführung der Entkalkung wieder aus dem Getränkeautomaten entfernt und anschließend entsorgt werden muss. Dadurch entsteht zunächst ein erheblicher Arbeitsaufwand für den Nutzer des Getränkeautomaten und darüber hinaus verhältnismäßig viel Abfall, was aus ökologischen Gründen nachteilig ist. Ferner ist bei dieser Lösung der Kupplungsbereich zwischen Getränkeautomat und Kartusche sehr aufwändig gestaltet, sodass die in der Schrift offenbarte Ausführung aus verschiedenen Gesichtspunkten heraus eher unwirtschaftlich erscheint.

Die WO 2012/035247 A1 offenbart eine Aufnahmevorrichtung mit einer Kupplungseinrichtung für eine Pflege mittel-Kartusche für ein Strömungsleitungssystem in einem Getränkeautomaten. Die Kartusche ist dabei an einem Schieber befestigt, mit dem die Kartusche, ähnlich einer Schublade, in einen Aufnahmeraum im Gerät eingeschoben werden kann. Als Kupplungsvorrichtung dient ein Tauchrohr, welches sich vom Behälterinneren durch die Schublade hindurch in das Innere des Getränkebereiters erstreckt.

Der Verbindungsbereich zwischen Kartusche und Aufnahmevorrichtung birgt verschiedene Probleme in sich. So kann es beispielsweise beim Wechsel der Kartusche zu Leckagen kommen, was dazu führt, dass Teile des in der Kartusche enthaltenen Pflegemittels in das Geräteinnere des die Kartusche in einer Aufnahmevorrichtung aufnehmenden Getränkeautomaten gelangen können. Dies birgt die Gefahr von Schäden oder zumindest starken Verunreinigungen in sich.

Häufig ist auch zu beobachten, dass die Kartusche vom Anwender des Getränkeautomaten versehentlich nicht korrekt in den Getränkeautomaten eingesetzt wird, so dass es auch dadurch zu Leckagen kommen kann.

Bislang sind keine befriedigenden Lösungen bekannt, die es ermöglichen, die Kartusche aus dem Getränkeautomaten zu entnehmen, wenn diese noch nicht vollständig entleert ist, um sie anschließend wieder in den Getränkeautomaten einsetzen zu können, ohne dass es zu Verlusten des Pflegemittels beziehungsweise zu Verlusten der Lösung des Pflegemittels kommt. Die Entnahme der noch teilweise befüllten Kartusche aus dem Getränkeautomaten kann beispielsweise dann erforderlich werden, wenn dieser zu Wartungs- und/oder Reparaturzwecken transportiert werden muss.

Der Erfindung stellt sich somit das Problem, eine Aufnahmevorrichtung mit einer Kupplungseinrichtung für eine Kartusche bereitzustellen, die ein Pflegemittel für die Pflege des in einem Getränkeautomaten vorhandenen Strömungsleitungssystems aufweist, wobei insbesondere eine zuverlässige Abdichtung zwischen Kartusche und Aufnahmevorrichtung gewährleistet sein sollte. Darüber hinaus ist ein Getränkeautomat anzugeben, der eine derartige Aufnahmevorrichtung aufweist und ein Verfahren zu beschreiben, mit dessen Hilfe die Kartusche in der Aufnahmevorrichtung fixierbar ist.

Erfindungsgemäß wird dieses Problem durch eine Aufnahmevorrichtung mit den Merkmalen des Patentanspruches 1 sowie mit einem Getränkeautomaten nach Anspruch 16 und einem

Verfahren gemäß dem Patentanspruch 17 gelöst.

Vorteilhafte Ausgestaltungen und Weiterbildungen der Erfindung ergeben sich aus den sich jeweils anschließenden Unteransprüchen.

Eine Aufnahmevorrichtung mit einer Kupplungseinrichtung für eine Kartusche, deren Funktion eine portionierte Abgabe eines Pflegemittels zur Pflege des für die Getränkezubereitung in einem Getränkeautomaten vorhandenen Strömungsleitungssystems ist, wobei die Kartusche gegenüber der Umgebung flüssigkeitsdicht in die Kupplungseinrichtung einsetzbar ist, wurde erfindungsgemäß dahingehend weitergebildet, dass in der Aufnahmevorrichtung ein die Kartusche positionierender Schieber angeordnet ist.

Dem Schieber kommt dabei eine ganz maßgebliche Bedeutung zu. Er stellt die Verbindung zwischen der Aufnahmevorrichtung und der in diese einzusetzenden Kartusche in einer Weise her, die ein Abfangen der Gewichtskraft der Kartusche ermöglicht. Dadurch kann erreicht werden, dass der Verbindungsbereich zwischen Kartusche und Aufnahmevorrichtung ganz wesentlich entlastet und die Abdichtung gegenüber der Umgebung vereinfacht sowie verbessert wird. Folglich sind die Anforderungen an die einzusetzenden Dichtungen wesentlich geringer, als dies bei bekannten Lösungen der Fall ist. Das die Kartusche aufnehmende Bauteil wurde als Schieber ausgeführt, weil ein Schieber den Vorteil mit sich bringt, die Kartusche beliebig oft in die Aufnahmevorrichtung einsetzten und wieder aus dieser entnehmen zu können. Somit lassen sich mit der Erfindung sowohl Einweg-Kartuschen, als auch Mehrwegkartuschen mehrfacher verwenden, was eine wesentliche Vereinfachung und Verbesserung darstellt. Die Erfindung ist damit insgesamt ökonomischer und auch ökologischer, als bislang bekannte Ausführungen.

Eine erste Ausgestaltung der Erfindung geht dahin, dass die Kartusche einen Wasserzulaufstutzen und einen Pflegemittelabführstutzen aufweist, die passgenau in die Kupplungseinrichtung einsetzbar sind, sodass die Kartusche strömungsleitend mit dem Strömungsleitungssystem koppelbar ist.

Anders ausgedrückt, wird die Verbindung zwischen der Kartusche und dem Strömungsleitungssystem des Getränkeautomaten unmittelbar durch das Einsetzen der Kartusche in die Aufnahmevorrichtung hergestellt beziehungsweise bei der Entnahme der Kartusche wieder unterbrochen. Der eingangs bereits erwähnte Schieber ermöglicht hierbei eine zuverlässige Vermeidung üblicherweise entstehender Leckagen.

Ein besonders einfacher und vorteilhafter Vorschlag besteht darüber hinaus darin, den Schieber entlang einer korrespondierenden Gleitkontur bewegbar in die Aufnahmevorrichtung einzusetzen. Am Schieber ist für dessen Bewegbarkeit entlang der Gleitkontur eine Gleitfläche vorhanden. Der wesentliche Vorzug einer derartigen Ausführung besteht in dem Gleitkontakt des Schiebers mit der Aufnahmevorrichtung, wodurch der Schieber sehr gleichmäßig und leichtgängig innerhalb der Aufnahmevorrichtung bewegt werden kann. Seine Anwendung ist damit auch für ungeübte Nutzer eines damit ausgestatteten Getränkeautomaten sehr einfach. Die Bewegbarkeit des Schiebers entlang der Gleitkontur der Aufnahmevorrichtung kann auch in einer Gleitführung bestehen, sodass dadurch zusätzlich Querbewegungen des Schiebers vermieden werden können und dieser zuverlässig innerhalb der Aufnahmevorrichtung geführt ist.

Zur Vermeidung des vollständigen Herauslösens des Schiebers aus der Aufnahmevorrichtung ist es hilfreich, wenn die Aufnahmevorrichtung hierfür entsprechend angepasst ist und beispielsweise einen Endanschlag des Schiebers ermöglicht. So geht ein weiterführender Vorschlag der Erfindung dahin, dass die Aufnahmevorrichtung einen einseitig offenen Kartuschenraum mit zwei äquidistant und verlaufskonform ausgerichteten Führungsschlitzen aufweist, in denen jeweils ein korrespondierender Gleitschuh des Schiebers geführt ist. Die Führungsschlitze werden hierbei bevorzugt als in sich geschlossene Kontur ausgeführt, in der die Gleitschuhe aufgenommen und gleitend geführt sind. Dabei bewegen sich die Gleitschuhe zwischen einem vorderen und einem hinteren Endanschlag, was zur Folge hat, dass bei aus der Aufnahmevorrichtung herausgezogenem Schieber die Kartusche problemlos in die Aufnahmevorrichtung eingeführt werden kann, um diese anschließend durch das Einführen des Schiebers in die Aufnahmevorrichtung in geeigneter Weise zu fixieren.

Da es immer wieder zu beobachten ist, dass trotz sorgfältigster Anweisungen in der Bedienungsanleitung eines Getränkeautomaten einzelne Anwender die Kartusche nicht korrekt in die Aufnahmevorrichtung einsetzen, sollte eine verbesserte Ausführung helfen, Fehler dieser Art von Anfang an zu vermeiden. Aus diesem Grund geht eine sehr vorteilhafte Ausgestaltung der Erfindung dahin, dass der Schieber eine Justierfläche aufweist, die auf seiner der Kartusche zugewandten Seite ausgebildet ist und bei in die Aufnahmevorrichtung eingesetztem Schieber an einer korrespondierenden und komplementär zu der Justierfläche ausgerichteten Stützfläche der Kartusche anliegt. Durch das einführen des Schiebers in die Aufnahmevorrichtung wird über die Justierfläche und die korrespondierende Stützfläche auf sehr einfache Weise eine Justierung beziehungsweise Ausrichtung der Kartusche innerhalb der Aufnahmevorrichtung erreicht. Mit anderen Worten hat der Schieber auch die Funktion, eine gegebenenfalls versehentlich nicht exakt in die Aufnahmevorrichtung eingesetzte Kartusche auszurichten und damit zu gewährleisten, dass der Dichtungsbereich zwischen Kartusche und Aufnahmevorrichtung zuverlässig funktioniert und abdichtet. Folgerichtig ist der Schieber hinsichtlich der Vermeidung von Leckagen hilfreich.

Eine spezielle Ausgestaltungsvariante der Justierfläche ist darin zu sehen, dass diese im Querschnitt betrachtet eine Neigung zur Horizontalen aufweist und mit der Horizontalen einen Winkel einschließt, der weniger als 90° beträgt. Die Justierfläche wird demnach als eine Schrägfläche ausgeführt, die auf die mit ihr kommunizierende Stützfläche der Aufnahmevorrichtung eine resultierende Kraft ausübt, die auf sehr einfacher Weise beim Einführen des Schiebers in die Aufnahmevorrichtung zur Ausrichtung der Kartusche innerhalb der Aufnahmevorrichtung führt.

Unabhängig davon ob die Kartusche als Einwegartikel oder als Mehrwegartikel hergestellt wird, weist sie in der Regel ein Deckelelement beziehungsweise einen Deckel auf, der entweder lösbar oder stoffschlüssig mit der Kartusche verbunden ist. Zur Vereinfachung der Fertigung der Kartusche ist es von Vorteil, wenn sowohl das Deckelelement, als auch die Kartusche als solche aus dem gleichen Werkstoff hergestellt sind und während der Herstellung der Wasserzulaufstutzen und der Pflegemittelabführstutzen als integrale Bestandteile des den oberen Abschluss der Kartusche bildenden Deckelelementes ausgeführt werden. Besonders einfach und kostengünstig lässt sich diese Lösung umsetzen, wenn die Kartusche insgesamt, also einschließlich des Deckelelementes, aus Kunststoff hergestellt ist.

Weist die Kartusche wenigstens einen Steg auf, so kann dieser dazu verwendet werden, die Kartusche in den Schieber einzusetzen und diese darin zu halten beziehungsweise zu fixieren. Folglich wird der Steg in eine in dem Schieber vorhandene Führungskontur eingeführt. Dabei ist es unerheblich, ob der Steg an der Kartusche oder am Deckelelement angeformt ist oder als separates Element an der Kartusche vorgesehen wird. Darüber hinaus kann der Steg sowohl am Deckelelement, als auch im Bereich der Mantelfläche der Kartusche vorgesehen werden und eine beliebige Querschnittsgeometrie aufweisen. Von Bedeutung ist hierbei lediglich, dass die Führung innerhalb der Führungskontur des Schiebers problemlos möglich ist.

Da der Schieber bevorzugt den oberen Abschnitt der Kartusche aufnimmt, ist es von Vorteil, wenn im Bereich des Bodens der Kartusche zumindest partiell eine Gleitführung vorhanden ist, die an der Innenmantelfläche des Kartuschenraumes gleitet. Dies hat zur Folge, dass die Kartusche in ihrem deckelseitigen Bereich in dem Schieber aufgenommen und in ihrem bodenseitigen Abschnitt zusätzlich innerhalb der Aufnahmevorrichtung geführt ist. Dadurch wird die Aufnahme und der Halt der Kartusche innerhalb der Aufnahmevorrichtung wesentlich verbessert. Ein seitliches Ausweichen der Kartusche ist folglich mit dieser einfachen Maßnahme vermeidbar und stellt somit eine zusätzliche Verbesserung der Abdichtung unter Vermeidung von Leckagen dar.

Bisher bekannte Kartuschenausführungen sind häufig in der Handhabung verhältnismäßig schwierig, weil der Anwender unsicher ist, wie er eine derartige Kartusche erfassen und in die Aufnahmevorrichtung einsetzen kann oder soll. Aus diesem Grund geht eine vorteilhafte Weiterbildung der Erfindung dahin, dass die Kartusche auf ihrer der Einführrichtung in die Aufnahmevorrichtung gegenüberliegenden Seite einen Griff aufweist. Mit dieser verhältnismäßig einfachen Maßnahme wird dem Nutzer des Getränkeautomaten ohne eine aufwändige Bedienungsanleitung unmittelbar selbsterklärend klar, wie die Kartusche erfasst werden kann, um sie in die Aufnahmevorrichtung einzusetzen beziehungsweise sie aus der Aufnahmevorrichtung zu entnehmen.

Eine weitere Verbesserung und Erleichterung des Einsetzens der Kartusche in die Aufnahmevorrichtung beziehungsweise ihrer Entnahme aus der Aufnahmevorrichtung kann darüber hinaus dadurch erreicht werden, dass die Kartusche auf ihrer der Einführrichtung in die Aufnahmevorrichtung gegenüberliegenden Seite ein die korrekte Einführbewegung der Kartusche in die Aufnahmevorrichtung versinnbildlichendes Symbol aufweist. Dieses Symbol kann im einfachsten Fall ein Pfeil, ein Doppelpfeil, ein bogenförmiger Pfeil oder ein abgewinkelter Pfeil sein, der je nach Bauart des Getränkeautomaten beziehungsweise Ausführung der Aufnahmevorrichtung die Einführungsrichtung beziehungsweise die Entnahmerichtung der Kartusche symbolisiert.

Wie eingangs bereits ausgeführt wurde, kann es beispielsweise für Wartungs- und/oder Reparaturarbeiten an dem Getränkeautomaten erforderlich werden, die Kartusche aus der Aufnahmevorrichtung zu entnehmen, auch, wenn diese noch nicht vollständig entleert ist. In einem solchen Fall stellt der geöffnete Wasserzulaufstutzen beziehungsweise der geöffnete Pflegemittelabführstutzen ein Risiko für das Auslaufen des in der Kartusche vorhandenen Pflegemittels dar. Für die Zeit der Aufbewahrung der geöffneten, jedoch nicht vollständig entleerten Kartusche ist es daher von Vorteil, wenn an der der Einführrichtung in die Aufnahmevorrichtung gegenüberliegenden Seite der Kartusche je ein ablösbarer Verschluss für den Wasserzulaufstutzen und den Pflegemittelabführstutzen angeformt oder angeordnet ist. Der in dem genannten Abschnitt der Kartusche vorhandene Verschluss kann im Bedarfsfall von der Kartusche abgelöst oder abgetrennt und auf den Wasserzulaufstutzen beziehungsweise den Pflegemittelabführstutzen aufgesetzt werden, so dass durch diese einfache Maßnahme kein Pflegemittel aus der Kartusche entweichen kann. Bevorzugt werden die Verschlüsse als Einwegartikel hergestellt und können beispielsweise bei der Produktion der Kartusche unmittelbar an der Außenoberfläche der Kartusche ausgebildet werden. Natürlich ist es ebenso möglich, die Verschlüsse mit der Kartusche auszuliefern, so dass sie dem Anwender des Getränkeautomaten im Bedarfsfall zur Verfügung stehen.

Da der Abstand zwischen dem Wasserzulaufstutzen und den Pflegemittelabführstutzen der Kartusche ein festes Maß darstellt, ist es gemäß einer Ausgestaltung der zuvor beschriebenen Lösung auch möglich, die Verschlüsse als eine Einheit auszubilden. Als eine solche Einheit werden sie im Bedarfsfall von der Kartusche abgelöst und mit nur einem Arbeitsgang auf die beiden zuvor genannten Stutzen aufgesetzt.

Wird die Kartusche insgesamt als Einwegartikel ausgeführt, so bedeutet dies für die erfindungsgemäße Lösung nicht, dass sie nach einer Entnahme aus der Aufnahmevorrichtung in jedem Fall sofort entsorgt werden muss. Vielmehr wird durch die Halterung der Kartusche über einen Schieber eine mehrfache Verwendung auch dann ermöglicht, wenn die Kartusche als Einweg-Kartusche ausgeführt ist. Hierzu leisten auch die zuvor bereits erwähnten Verschlüsse einen maßgeblichen Beitrag. Unter einer Einweg-Kartusche wird im erfindungsgemäßen Sinne lediglich eine Kartusche verstanden, die als geschlossene oder verkapselte Einheit hergestellt und bereits mit einem Pflegemittel befüllt ist. Derartige Einweg-Kartuschen können nach dem vollständigen Verbrauch des Pflegemittels in der Regel nicht wieder mit dem Pflegemittel befüllt werden. Bei Mehrwegartikeln ist eine erneute Befüllung hingegen jederzeit möglich.

Wird die Kartusche aus der Aufnahmevorrichtung entnommen, so kann es vorkommen, dass in den Fluid führenden Kupplungsteilen der Aufnahmevorrichtung noch Reste des Pflegemittels vorhanden sind. Um ein Abtropfen dieser Reste und damit auch hier eine entstehende Leckage wirksam zu vermeiden, geht eine vorteilhafte Weiterbildung der Erfindung dahin, dass die Kupplungseinrichtung, in Strömungsrichtung betrachtet, vor dem Wasserzulaufstutzen beziehungsweise nach dem Pflegemittelabführstutzen jeweils mindestens ein Einwegeventil aufweist und/oder die Kartusche in Strömungsrichtung betrachtet, in oder nach dem Wasserzulaufstutzen beziehungsweise vor oder in dem Pflegemittelabführstutzen jeweils mindestens ein Einwegeventil aufweist. Die genannten Ventile dichten dabei unmittelbar nach der Entnahme der Kartusche die Teile des Strömungsleitungssystems ab, in denen sich Fluidreste befinden können.

Ein erfindungsgemäßer Getränkeautomat ist dadurch gekennzeichnet, dass der Getränkeautomat ein Strömungsleitungssystem für die Zubereitung eines Mischgetränkes oder eines Aufgussgetränkes aufweist. Dieses Strömungsleitungssystem weist eine Aufnahmevorrichtung mit einer Kartusche auf, um mit Hilfe des darin enthaltenen Pflegemittels eine regelmäßige, bevorzugt automatische Pflege des Strömungsleitungssystems durchführen zu können. Folgerichtig handelt es sich bei dem Getränkeautomaten bevorzugt um einen Vollautomaten. Nur beispielhaft sei an dieser Stelle ein Kaffeevollautomat erwähnt. Das Strömungsleitungssystem eines derartigen Getränkeautomaten umfasst diverse Fluidleitungen, die die für die Herstellung der Getränke erforderlichen Medien führen. Dabei kann es sich um flüssige oder auch um gasförmige Medien handeln. Weiterhin weist ein Strömungsleitungssystem in einem Getränkeautomaten auch verschiedene Aggregate und/oder Geräte auf. Als Beispiel seien an dieser Stelle Entnahmeeinrichtungen genannt, über die beispielsweise ein Getränk entnommen oder Wasserdampf abgegeben werden kann.

Das erfindungsgemäße Verfahren zur lösbaren Fixierung einer Kartusche in einer Aufnahmevorrichtung in einem derartigen Getränkeautomaten ist durch folgende Verfahrensschritte gekennzeichnet:
- Herausziehen eines ursprünglich in die Aufnahmevorrichtung eingesetzten und gleitend bewegbar in der Aufnahmevorrichtung geführten Schiebers, bis zu einem Endanschlag,
- Einbringung der Kartusche in einen innerhalb der Aufnahmevorrichtung vorhandenen Kartuschenraum,
- Vertikalbewegung der Kartusche, sodass ein an der Kartusche vorhandener Wasserzulaufstutzen und ein Pflegemittelabführstutzen passgenau in eine Kupplungseinrichtung eingesetzt werden,
- Einführen des Schiebers in Richtung der Kartusche.

Eine Ausgestaltung des erfindungsgemäßen Verfahrens ist darin zu sehen, dass der Schieber so weit in die Aufnahmevorrichtung eingeschoben wird, bis eine an dem Schieber vorhandene Justierfläche durch Anlage an einer zu der Justierfläche komplementär verlaufenden Stützfläche der Kartusche die Kartusche in ihrer Endlage positioniert hat. Der Schieber wird folglich mit einem gewissen Druck gegen die Kartusche geführt, so dass er diese insbesondere in ihrer Position justiert und damit gleichzeitig fixiert. Die Justierfläche und die Stützfläche gleiten dabei aneinander entlang, bis die Kartusche vollständig in der Aufnahmevorrichtung ausgerichtet ist.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: die perspektivische Darstellung eines als Kaffeevollautomaten ausgeführten Getränkeautomaten in einer Ansicht von schräg hinten,
- Figur 2:: eine räumliche Ansicht des Kaffeevollautomaten aus Figur 1 mit Blick in eine Aufnahmevorrichtung,
- Figur 3:: einen vereinfachten Schaltplan eines Strömungsleitungssystems innerhalb eines Getränkeautomaten,
- Figur 4:: eine Explosivdarstellung der Aufnahmevorrichtung, des Schiebers und der Kartusche und
- Figur 5:: ein Teilzusammenbau, bestehend aus der Kartusche mit dem diese aufnehmenden Schieber, gemäß dem Schnittverlauf VI-VI aus Figur 5.

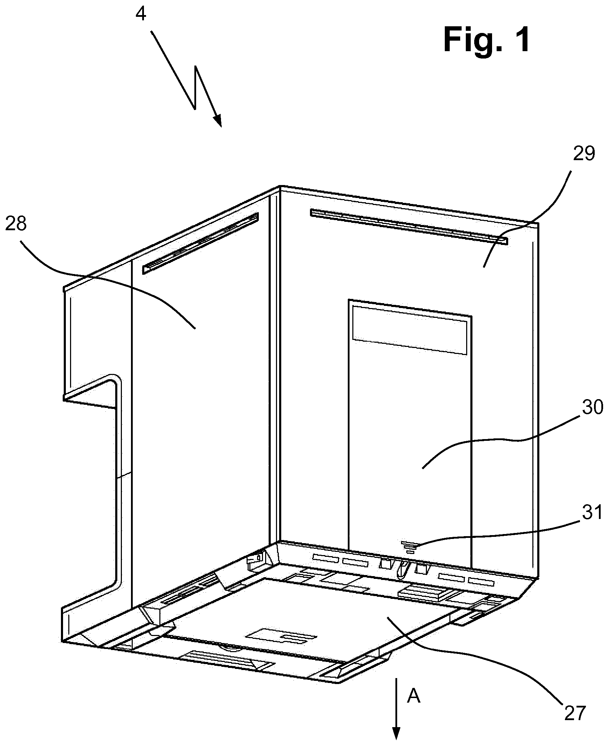

Die in der Figur 1 dargestellte perspektivische Ansicht eines als Kaffeevollautomaten ausgeführten Getränkeautomaten 4 zeigt diesen in einer Ansicht von schräg hinten. Der sichtbare Teil des Getränkeautomaten 4 in Figur 1 verfügt über einen Gehäuseboden 27, zwei, einander gegenüberliegende Seitenflächen 28 sowie über eine Rückwand 29. Die Besonderheit bei dem dargestellten Beispiel besteht darin, dass in die Rückwand 29 ein abnehmbarer Deckel 30 als Schutz für eine dahinter vorhandene Aufnahmevorrichtung 1 integriert ist. Im unteren, dem Gehäuseboden 27 nahen Bereich weist der Deckel 30 eine Grifffläche 31 auf, die dazu dient, den Deckel 30 zu lösen beziehungsweise zu entfernen. Dabei wird der Deckel 30 an der Grifffläche 31 erfasst und in Richtung des Pfeils A bewegt.

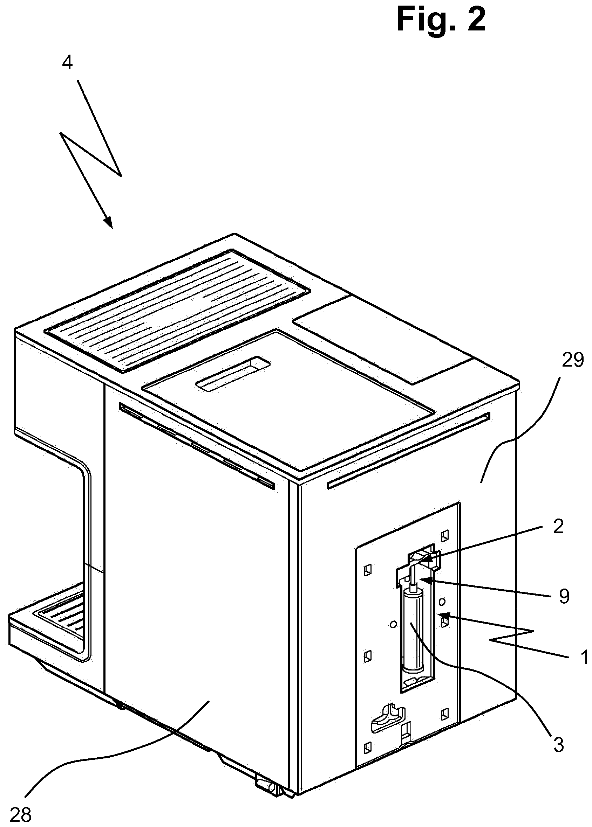

Aus der Figur 2 geht eine geringfügig geänderte Sichtweise auf den Getränkeautomaten 4 aus Figur 1 hervor. In diesem Fall wurde der Deckel 30 in der zuvor beschriebenen Weise entfernt, so dass nunmehr ein Blick in die Aufnahmevorrichtung 1 des Getränkeautomaten 4 möglich ist. Andeutungsweise lässt sich der Figur 2 eine in einen Kartuschenraum 9 der Aufnahmevorrichtung 1 eingesetzte Kartusche 3 entnehmen, deren Oberseite in einer Kupplungseinrichtung 2 fixiert ist.

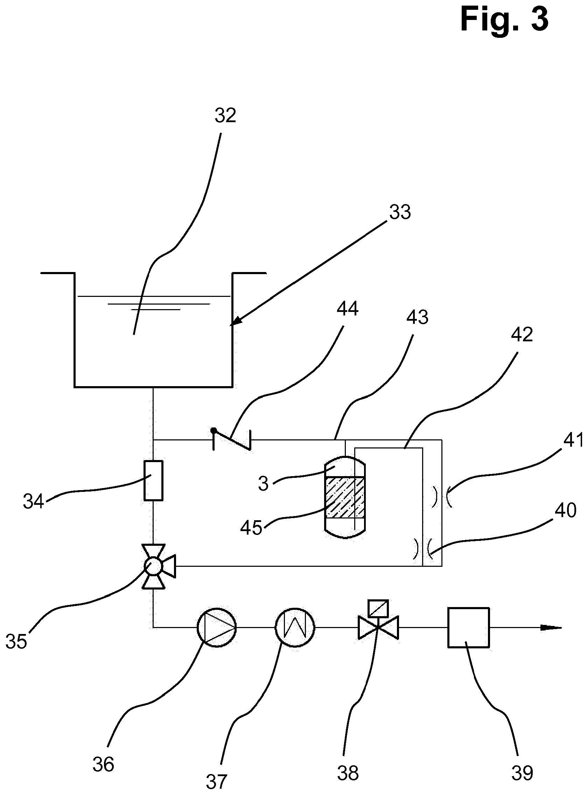

Die Figur 3 zeigt einen vereinfachten Schaltplan eines Strömungsleitungssystems eines Getränkeautomaten 4. Von einer Wasserquelle 33 wird das Strömungsleitungssystem mit frischem Wasser 32 versorgt. Bei der dargestellten Wasserquelle 33 handelt es sich um einen Wassertank.

Das Strömungsleitungssystem setzt sich aus zwei Teilen zusammen, wobei ein erster, Wasser führender Teil, der Zubereitung von Getränken dient und der andere Teil in diesem speziellen Beispiel als Bypass von dem ersten Teil des Strömungsleitungssystems abgezweigt ist und bei Bedarf strömungsleitend an den Wasser führenden Teil des Strömungsleitungssystems angeschlossen werden kann. Zur Verbindung des Bypasses mit oder zur Trennung des Bypasses von dem ersten Teil des Strömungsleitungssystems dienen einerseits ein Einwegventil 44 und andererseits ein als Dreiwegeventil ausgeführtes Mehrwegeventil 35. Aus praktischen Erwägungen können diese Ventile selbstverständlich auch zu einem Vierwegeventil zusammengefasst, beziehungsweise grundsätzlich als eine Baueinheit ausgeführt sein. Die Erzeugung einer Strömung innerhalb des Strömungsleitungssystems sowie des erforderlichen Druckaufbaus wird mittels einer Pumpe 36 realisiert. Darüber hinaus weist der zur Zubereitung der Getränke genutzte Teil des Strömungsleitungssystems in an sich bekannter Weise eine Heizeinrichtung 37 beziehungsweise ein Thermostat zur Erwärmung des Wassers sowie mindestens eine Entnahmeeinrichtung 39 auf, die in dem dargestellten Schaltplan lediglich als Blackbox angedeutet wurde und bei der es sich beispielsweise um eine Dampfdüse und/oder eine Brüheinheit zur Erzeugung eines Aufgussgetränkes handeln kann. Zur selektiven Ansteuerung der Entnahmeeinrichtung 39 dient ferner ein weiteres Mehrwegeventil 38, das der Entnahmeeinrichtung 39, in Strömungsrichtung betrachtet, vorgeschaltet ist. Darüber hinaus weist das in Figur 3 gezeigte Strömungsleitungssystem ein Messgerät 34 zur Volumenstrommessung auf, um eine genaue Größenordnung der Menge des frischen Wassers 32 bestimmen zu können, das für die Zubereitung eines Getränkes erforderlich ist. Mit einem derartigen Messgerät 34 lässt sich auch die Anzahl der hergestellten Getränke bestimmen.

Betrachtet man nun den als Bypass gestalteten, zweiten Teil des Strömungsleitungssystems, so bildet das zentrale Element die Kartusche 3, die über eine Strömungsleitung 43 mit frischem Wasser 32 versorgt wird, so dass das in der Kartusche 3 enthaltene Pflegemittel 45, welches ursprünglich einen festen Aggregatzustand aufweist, teilweise in eine Lösung des Pflegemittels übergeht, die über die Kapillarleitung 42 dosiert an den als Bypass ausgeführten Teil des Strömungsleitungssystems abgegeben wird, wenn ein Pflegevorgang durchgeführt werden soll. Die in den Bodenbereich der Kartusche 3 mündende Kapillarleitung 42 weist in diesem Fall eine Drosselstelle 40 auf oder bildet selbst eine derartige Drosselstelle und ist an anderer Stelle ebenfalls an die Strömungsleitung 43 angeschlossen. Die Strömungsleitung 43 verfügt ebenfalls über eine Drosselstelle 41, so dass ein definierter Rückstau innerhalb der Strömungsleitung 43 erreicht wird, der die Versorgung der Kartusche 3 mit frischem Wasser ermöglicht. Die Drosselstellen 41 und 40 dienen jeweils einer exakten Dosierung.

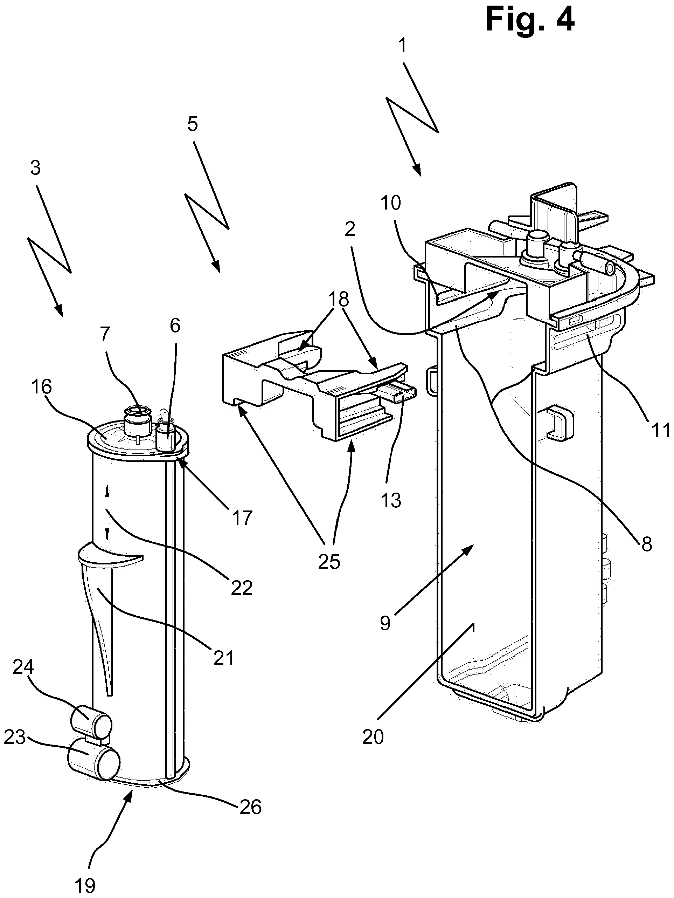

In der Figur 4 ist eine Explosivdarstellung der Aufnahmevorrichtung 1, des Schiebers 5 und der Kartusche 3 dargestellt.

Die Kartusche 3 verfügt bei dem dargestellten Beispiel über eine längliche, annähernd kreiszylindrische Geometrie. Den unteren Teil der Kartusche 3 bildet ein Boden 19, der auf zwei einander gegenüberliegenden Seiten jeweils eine Gleitfläche 26 mit einer Breite aufweist, die über den Korpus der Kartusche hinausragt. Dem Boden 19 gegenüberliegend verfügt die Kartusche 3 ferner über ein Deckelelement 16, in das ein Wasserzulaufstutzen 7 und ein Pflegemittelabführstutzen 6 integriert ist. Der Wasserzulaufstutzen 7 und der Pflegemittelabführstutzen 6 werden beim Einsetzen der Kartusche 3 in die Aufnahmevorrichtung 1 jeweils mit einem korrespondierenden Anschluss der Kupplungseinrichtung 2 gekoppelt, so dass dadurch eine strömungsleitende Verbindung zum Strömungsleitungssystem des Getränkeautomaten 4 hergestellt werden kann. Etwa fluchtend mit der Gleitfläche 26 des Bodens 19 ist an dem Deckelelement 16 auf zwei einander gegenüberliegenden Seiten des Deckelelementes 16 jeweils ein Steg 17 angeformt, dessen Funktion nachfolgend im Zusammenhang mit der Erläuterung des Schiebers 5 noch näher ausgeführt wird. Eine weitere Besonderheit der in Figur 4 dargestellten Kartusche 3 besteht darüber hinaus darin, dass diese auf ihrer der Einschubrichtung in die Aufnahmevorrichtung 1 gegenüberliegenden Seite einen Griff 21 aufweist, der das Erfassen der Kartusche 3 und das Einsetzen der Kartusche 3 in die Aufnahmevorrichtung 1 sowie die Entnahme der Kartusche 3 aus der Aufnahmevorrichtung 1 für den Anwender erheblich erleichtert. Darüber hinaus ist oberhalb des Griffes 21 ein Symbol 22 in Form eines Doppelpfeils auf die Kartusche 3 aufgebracht. Dieses Symbol 22 dient dazu, die Einsetz- beziehungsweise Entnahmerichtung der Kartusche 3 zu versinnbildlichen. Im Bereich des Bodens 19 der Kartusche 3 sind ferner zwei Verschlüsse 23 und 24 angeordnet, die bei einer nicht vollständig entleerten Kartusche 3 auf den Wasserzulaufstutzen 7 und den Pflegemittelabführstutzen 6 aufgesetzt werden, wenn die Kartusche 3 aus irgend einem Grund vor ihrer vollständigen Entleerung aus der Aufnahmevorrichtung 1 entnommen werden muss. Die gesamte Kartusche 3 ist im vorliegenden Beispiel als Einweg-Kartusche ausgeführt, so dass der Boden 19 und das Deckelelement 16 sowie die Verschlüsse 23, 24 bei der Herstellung der Kartusche 3 unmittelbar an diese angeformt werden.

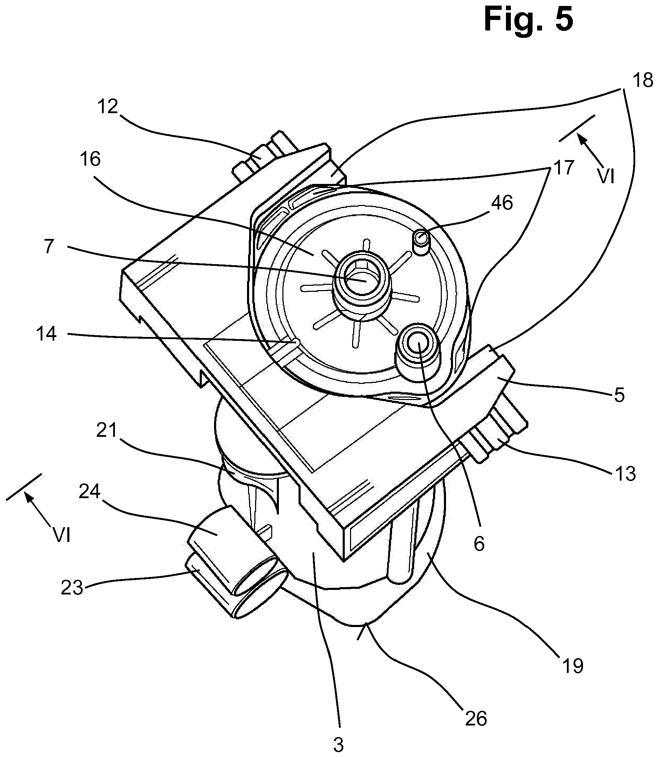

Die Kartusche 3 wird insgesamt in die Aufnahmevorrichtung 1 eingeführt und mittels des Schiebers 5 darin fixiert, wobei gleichzeitig eine strömungsleitende Verbindung zum Strömungsleitungssystem des Getränkeautomaten 4 hergestellt wird. Bei genauer Betrachtung der Kartusche 3 in Figur 4 fällt an dem Wasserzulaufstutzen 7 und dem Pflegemittelabführstutzen 6 auf, dass diese jeweils Dichtungen aufweisen, die dazu dienen, beim Einsetzen der Kartusche 3 in den Kartuschenraum 9 der Aufnahmevorrichtung 1 eine gegenüber der Umgebung dichtende Verbindung zu den korrespondierenden Anschlussstutzen der Kupplungseinrichtung 2 zu schaffen. Der zuvor bereits genannte Steg 17 der Kartusche 3 korrespondiert mit einer Führungskontur 18 des Schiebers 5 derart, dass die an der Kartusche 3 ausgebildeten Stege 17 in dieser Führungskontur 18 gleiten und der Schieber 5 soweit unter die Stege 17 der Kartusche 3 geschoben wird, bis die Kartusche 3 vollständig in der Aufnahmekontur des Schiebers 5 aufgenommen ist. Der Schieber 5 ist seinerseits über zwei seitlich an ihm vorhandenen Gleitschuhe 12 und 13 in korrespondierenden Führungsschlitzen 10 und 11 der Aufnahmevorrichtung 1 sowie über eine an seiner Unterseite vorhandene Gleitfläche 25 in einer Gleitkontur 8 des Kartuschenraumes 9 der Aufnahmevorrichtung 1 gleitend geführt. Durch die Kontur der Führungsschlitze 10, 11 werden Endanschläge für den Schieber 5 definiert, zwischen denen eine Bewegung des Schiebers 5 möglich ist. Zum Einsetzen der Kartusche 3 in den Kartuschenraum 9 der Aufnahmevorrichtung 1 wird der Schieber 5 zunächst vollständig aus dem Kartuschenraum 9 herausbewegt bis die Gleitschuhe 12, 13 an den äußeren Endanschlägen der Führungsschlitze 10, 11 zur Anlage kommen. Nunmehr kann die Kartusche 3 zunächst mit einer Horizontalbewegung in den Kartuschenraum 9 eingeführt und anschließend in Richtung des Symbols 22 vertikal nach oben bewegt werden, so dass der Wasserzulaufstutzen 7 und der Pflegemittelabführstutzen 6 mit der Kupplungseinrichtung 2 in Eingriff gelangen und damit die bereits erwähnte strömungsleitende Verbindung hergestellt ist. In diesem Zustand wäre die Kartusche 3 in herkömmlicher Weise beispielsweise mittels einer Klemmverbindung in der Aufnahmevorrichtung 1 befestigt. Die erfindungsgemäße Verbesserung besteht jedoch darin, dass der Schieber die auf die Kupplungseinrichtung 2 wirkende Gewichtskraft der Kartusche 3 abfängt und damit die Kartusche 3 in verbesserter Weise innerhalb der Aufnahmevorrichtung 1 fixiert. Nach dem Einsetzen der Kartusche 3 in den Aufnahmeraum 9 der Aufnahmevorrichtung 1 in der zuvor beschriebenen Weise wird der Schieber 5 in den Aufnahmeraum 9 eingeschoben, so dass die Gleitflächen 18 unterhalb der korrespondierenden Stege 17 der Kartusche 3 entlang gleiten, bis die Kartusche 3 vollständig in der hierfür im Schieber 5 dafür vorgesehenen Aufnahmekontur anliegt. In dieser Position kommt eine weitere Besonderheit der Erfindung zum tragen, die darin besteht, dass die Justierfläche 14, die an der Innengeometrie der Aufnahmekontur des Schiebers 5 ausgebildet ist, unmittelbar an einer korrespondierenden Stützfläche 15 am Deckelelement 16 der Kartusche 3 zur Anlage kommt. Die Justierfläche 14 weist dabei eine Neigung zur Horizontalen auf und ist folglich, ebenso wie die Stützfläche 15, jedoch in entgegengesetzter Richtung zur Stützfläche 15, als Schrägfläche ausgebildet. Durch die Bewegung der Justierfläche 14 auf die gegensinnig geneigte Stützfläche 15 zu wird die gesamte Kartusche 3 in einer exakten Vertikalposition ausgerichtet. Dieser Umstand verbessert die Dichtungswirkung im Bereich der Kupplungseinrichtung 2 in entscheidendem Maße. Darüber hinaus kann auf diese Weise sichergestellt werden, dass ein Messwertgeber 46, der in der Figur 5 besser zu erkennen ist, mit einem korrespondierenden Messwertaufnehmer zusammenwirkt und damit ein Signal erzeugt, das zur Anzeige des Vorhandenseins der Kartusche 3 in der Aufnahmevorrichtung 1 nutzbar ist. Um eine darüber hinaus gehende Verbesserung der Dichtfunktion im Bereich der Kupplungseinrichtung 2 zwischen Kartusche 3 und Aufnahmevorrichtung 1 zu erreichen, ist am Boden 19 der Kartusche 3 die eingangs bereits erwähnte Gleitfläche 26 ausgebildet. Diese dient dazu, nach dem Einsetzen der Kartusche 3 in den Kartuschenraum 9 unmittelbar an der Innenmantelfläche 20 des Kartuschenraumes 9 anzuliegen und damit eine untere Führung der Kartusche 3 innerhalb der Aufnahmevorrichtung 1 zu gewährleisten.

Betrachtet man nunmehr die Figur 5, so werden daraus die zuvor genannten Umstände noch einmal deutlich. Die perspektivische Ansicht der Kartusche 3 und des Schiebers 5 in Figur 5 zeigt die Justierfläche 14, die unmittelbar an der korrespondierenden, jedoch in der Figur 5 nicht näher bezeichneten Stützfläche 15 anliegt. Darüber hinaus geht aus der Darstellung deutlich hervor, dass der Schieber 5 eine Aufnahmekontur aufweist, in die das Deckelelement 16 der Kartusche 3 passend eingesetzt ist. Dabei gleiten die Stege 17 des Deckelelementes 16 unmittelbar in der hierfür am Schieber 5 vorhandenen Führungskontur 18. Das Deckelelement 16 der Kartusche 3 weist darüber hinaus auch einen Messwertgeber 46 auf, der der Sensierung der Kartusche 3 in der Aufnahmevorrichtung 1 dient. Der Messwertgeber 46 korrespondiert mit einem hierfür geeigneten Messwertaufnehmer, welcher das Vorhandensein oder Nichtvorhandensein der Kartusche 3 an eine zentrale Steuerungseinheit des Getränkeautomaten 4 weitergibt, so dass das ermittelte Signal für eine entsprechende Anzeige in einer geeigneten Anzeigevorrichtung verwendet werden kann. Deutlich geht aus der Figur 5 auch hervor, dass der Schieber an zwei einander gegenüberliegenden Seiten jeweils Gleitschuhe 12, 13 aufweist, die in der zuvor beschriebenen Weise in korrespondierende Führungsschlitze 10, 11 im Kartuschenraum 9 der Aufnahmevorrichtung 1 gleitend geführt sind.

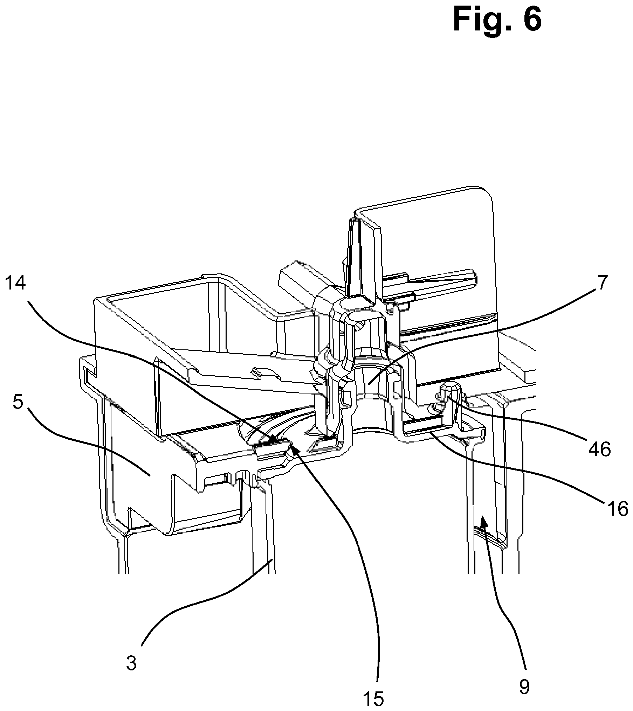

Die Figur 6 zeigt den Schnittverlauf VI-VI aus Figur 5. Hieraus wird ersichtlich, dass die Kartusche 3 im Bereich der Kupplungseinrichtung 2 mit ihrem Wasserzulaufstutzen 7 passend in einen korrespondierenden Anschluss der Aufnahmevorrichtung 1 unter gleichzeitiger Bildung einer Abdichtung gegenüber der Umgebung eingesetzt ist, wozu der Wasserzulaufstutzen 7 an seinem Außenumfang Dichtungen in Form einfacher O-Ringe aufweist. Diese einfache Art der Dichtung ist im vorliegenden Fall absolut ausreichend, da durch die Erfindung eine zuverlässige vertikale Ausrichtung und Fixierung der Kartusche 3 in der Aufnahmevorrichtung 1 über den Schieber 5 erreicht wird. Die Justierfläche 14 am Schieber 5 und die mit dieser korrespondierende Stützfläche 15 an der Außenoberfläche des Deckelelementes 16 gehen in ihrer Wirkungsweise deutlich aus der Darstellung in Figur 6 hervor. Aus der Figur 6 wird darüber hinaus jeweils die Ausführung der Justierfläche 14 und der Stützfläche 15 als Schrägfläche ersichtlich, wobei der Verlauf der Schrägen der Justierfläche 14 und der Stützfläche 15 einander entgegengesetzt gerichtet ist.

### BEZUGSZEICHENLISTE:

- 1: Aufnahmevorrichtung
- 2: Kupplungseinrichtung
- 3: Kartusche
- 4: Getränkeautomat
- 5: Schieber
- 6: Pflegemittelabführstutzen
- 7: Wasserzulaufstutzen
- 8: Gleitkontur
- 9: Kartuschenraum
- 10: Führungsschlitz
- 11: Führungsschlitz
- 12: Gleitschuh
- 13: Gleitschuh
- 14: Justierfläche
- 15: Stützfläche
- 16: Deckelelement
- 17: Steg
- 18: Führungskontur
- 19: Boden
- 20: Innenmantelfläche
- 21: Griff
- 22: Symbol (Pfeil)
- 23: Verschluss
- 24: Verschluss
- 25: Gleitfläche (des Schiebers)
- 26: Gleitfläche
- 27: Gehäuseboden
- 28: Seitenfläche
- 29: Rückwand
- 30: Deckel
- 31: Grifffläche
- 32: Wasser
- 33: Wasserquelle (Wassertank)
- 34: Messgerät zur Volumenstrommessung

### FORTSETZUNG BEZUGSZEICHENLISTE:

- 35: Mehrwegeventil
- 36: Pumpe
- 37: Heizeinrichtung
- 38: Mehrwegeventil
- 39: Entnahmeeinrichtung
- 40: Drosselstelle
- 41: Drosselstelle
- 42: Kapillarleitung
- 43: Strömungsleitung
- 44: Einwegventil
- 45: Pflegemittel (ungelöst)
- 46: Messwertgeber

## Patentansprüche

1. Aufnahmevorrichtung (1) mit einer Kupplungseinrichtung (2) für eine Kartusche (3),
deren Funktion eine portionierte Abgabe eines Mittels zur Pflege des für die
Getränkezubereitung in einem Getränkeautomaten (4) vorhandenen
Strömungsleitungssystems ist, wobei die Kartusche (3) gegenüber der Umgebung
flüssigkeitsdicht in die Kupplungseinrichtung (2) einsetzbar ist,
**dadurch gekennzeichnet, dass**
in der Aufnahmevorrichtung (1) ein die Kartusche (3) positionierender Schieber (5)
angeordnet ist, der entlang einer korrespondierenden Gleitkontur (8) bewegbar in die
Aufnahmevorrichtung (1) einführbar und dazu ausgebildet ist, die in die
Kupplungseinrichtung (2) eingesetzte Kartusche (3) in der Aufnahmevorrichtung (1) zu
positionieren und zu fixieren und dadurch die auf die Kupplungseinrichtung (2) wirkende
Gewichtskraft der Kartusche (3) abzufangen, wobei der Schieber (5) eine
Führungskontur (18) aufweist, die unterhalb korrespondierender Stege (17) der
Kartusche (3) gleitbar sind.

2. Aufnahmevorrichtung nach Anspruch 1, wobei eine Kartusche (3) vorgesehen ist, und wobei
die Kartusche (3) einen Wasserzulaufstutzen (6) und einen Pflegemittelabführstutzen (7) aufweist, die passgenau in die Kupplungseinrichtung (2) einsetzbar sind, sodass die Kartusche (3) strömungsleitend mit dem Strömungsleitungssystem koppelbar ist.

3. Aufnahmevorrichtung nach einem der vorstehend genannten Ansprüche,
**dadurch gekennzeichnet, dass**
die Aufnahmevorrichtung (1) einen einseitig offenen Kartuschenraum (9) mit zwei
äquidistant und verlaufskonform ausgerichteten Führungsschlitzen (10, 11) aufweist, in
denen jeweils ein korrespondierender Gleitschuh (12, 13) des Schiebers (5) geführt ist.

4. Aufnahmevorrichtung nach einem der vorstehend genannten Ansprüche,
**dadurch gekennzeichnet, dass**
der Schieber (5) eine Justierfläche (14) aufweist, die auf seiner der Kartusche (3) zugewandten Seite ausgebildet ist, die bei in die Aufnahmevorrichtung (1) eingesetztem Schieber (5) an einer korrespondierenden und komplementär zu der Justierfläche (14) ausgerichteten Stützfläche (15) der Kartusche (3) anliegt.

5. Aufnahmevorrichtung nach Anspruch 4,
**dadurch gekennzeichnet, dass**
die Justierfläche (14) im Querschnitt betrachtet eine Neigung zur Horizontalen aufweist und mit der Horizontalen einen Winkel einschließt, der weniger als 90° beträgt.

6. Aufnahmevorrichtung nach Anspruch 2 oder nach einem der Ansprüchen 3 bis 5 wenn abhängig von Anspruch 2,
**dadurch gekennzeichnet, dass**
der Wasserzulaufstutzen (6) und der Pflegemittelabführstutzen (7) integrale Bestandteile eines den oberen Abschluss der Kartusche (3) bildenden Deckelelementes (16) sind.

7. Aufnahmevorrichtung nach einem der vorstehend genannten Ansprüche, wobei eine Kartusche (3) vorgesehen ist, und wobei
die Kartusche (3) wenigstens einen Steg (17) aufweist, der in eine in dem Schieber (5) vorhandene Führungskontur (18) einführbar ist.

8. Aufnahmevorrichtung nach Anspruch 7,
**dadurch gekennzeichnet, dass**
der Steg (17) an der Mantelfläche oder an dem Deckelelement (16) der Kartusche (3) ausgebildet ist.

9. Aufnahmevorrichtung nach Anspruch 3 oder nach einem der Ansprüche 4 bis 8 wenn abhängig von Anspruch 3, wobei eine Kartusche (3) vorgesehen ist und wobei
die Kartusche (3) einen Boden (19) aufweist, der zumindest partiell mit der Innenmantelfläche (20) des Kartuschenraumes (9) eine Gleitführung bildet.

10. Aufnahmevorrichtung nach einem der vorstehend genannten Ansprüche, wobei eine Kartusche (3) vorgesehen ist, und wobei
die Kartusche (3) auf ihrer der Einführrichtung in die Aufnahmevorrichtung (1) gegenüberliegenden Seite einen Griff (21) aufweist.

11. Aufnahmevorrichtung nach einem der vorstehend genannten Ansprüche, wobei eine Kartusche (3) vorgesehen ist, und wobei
die Kartusche (3) auf ihrer der Einführrichtung in die Aufnahmevorrichtung (1)
gegenüberliegenden Seite ein die korrekte Einführbewegung der Kartusche (3) in die Aufnahmevorrichtung (1) versinnbildlichendes Symbol (22) aufweist.

12. Aufnahmevorrichtung nach Anspruch 2 oder nach einem der Ansprüchen 3 bis 11 wenn abhängig von Anspruch 2, mit
**dadurch gekennzeichnet, dass**
an der der Einführrichtung in die Aufnahmevorrichtung (1) gegenüberliegenden Seite der Kartusche (1) je ein ablösbarer Verschluss (23, 24) für den Wasserzulaufstutzen (6) und den Pflegemittelabführstutzen (7) angeordnet oder angeformt ist.

13. Aufnahmevorrichtung nach Anspruch 12,
**dadurch gekennzeichnet, dass**
die Verschlüsse (23, 24) als eine bauliche Einheit ausgebildet sind.

14. Aufnahmevorrichtung nach einem der vorstehend genannten Ansprüche, wobei eine Kartusche (3) vorgesehen ist, und wobei
die Kartusche (3) insgesamt als Einwegartikel ausgeführt ist.

15. Aufnahmevorrichtung nach Anspruch 2 oder nach einem der Ansprüchen 3 bis 14 wenn abhängig von Anspruch 2,
**dadurch gekennzeichnet, dass**
die Kupplungseinrichtung (2), in Strömungsrichtung betrachtet, vordem Wasserzulaufstutzen (6) beziehungsweise nach dem Pflegemittelabführstutzen (7) jeweils mindestens ein Einwegventil aufweist und/oder die Kartusche (3) in Strömungsrichtung betrachtet, in oder nach dem Wasserzulaufstutzen (6) beziehungsweise vor oder in dem Pflegemittelabführstutzen (7) jeweils mindestens ein Einwegeventil aufweist.

16. Getränkeautomat mit einer Aufnahmevorrichtung nach einem der vorstehend genannten Ansprüche,
**dadurch gekennzeichnet, dass**
der Getränkeautomat (4) ein Strömungsleitungssystem für die Zubereitung eines Mischgetränkes oder eines Aufgussgetränkes aufweist.

17. Verfahren zur lösbaren Fixierung einer Kartusche in einer Aufnahmevorrichtung nach einem der vorstehend genannten Ansprüche 1 bis 15 in einem Getränkeautomaten nach Anspruch 16,
**gekennzeichnet durch** die Verfahrensschritte:
- Herausziehen eines ursprünglich in die Aufnahmevorrichtung (1) eingesetzten und gleitend bewegbar in der Aufnahmevorrichtung (1) geführten Schiebers (5), bis zu einem Endanschlag,
- Einbringung der Kartusche (3) in einen innerhalb der Aufnahmevorrichtung (1) vorhandenen Kartuschenraum (9),
- Vertikalbewegung der Kartusche (3), sodass ein an der Kartusche (3) vorhandener Wasserzulaufstutzen (6) und ein Pflegemittelabführstutzen (7) passgenau in eine Kupplungseinrichtung (2) eingesetzt werden,
- Einführen des Schiebers (5) in Richtung der Kartusche (3).

18. Verfahren nach Anspruch 17,
**dadurch gekennzeichnet, dass**
der Schieber (5) soweit in die Aufnahmevorrichtung (1) eingeschoben wird, bis eine an dem Schieber (5) vorhandene Justierfläche (14) durch Anlage an einer zu der Justierfläche (14) komplementär verlaufenden Stützfläche (15) der Kartusche (3) die Kartusche (3) in ihrer Endlage positioniert hat.

## Claims

1. Receiving apparatus (1) comprising a coupling device (2) for a cartridge (3), the function of which is a portioned dispensing of a product for maintaining the flow line system present in a beverage machine (4) for preparing beverages, the cartridge (3) being inserted into the coupling device (2) in a liquid-tight manner with respect to the environment,
**characterised in that**
a slide (5) which positions the cartridge (3) is arranged in the receiving apparatus (1), which slide can be inserted into the receiving apparatus (1) so as to be movable along a corresponding sliding contour (8) and is designed to position and fix the cartridge (3) inserted into the coupling device (2) in the receiving apparatus (1) and thereby to intercept the weight of the cartridge (3) acting on the coupling device (2), the slide (5) having a guide contour (18) which can be slid underneath corresponding ridges (17) of the cartridge (3).

2. Receiving apparatus according to claim 1, wherein a cartridge (3) is provided, and
wherein the cartridge (3) has a water inlet nozzle (6) and a maintenance product discharge nozzle (7), which can be inserted precisely into the coupling device (2) so that the cartridge (3) can be coupled to the flow line system in a flow-conducting manner.

3. Receiving apparatus according to either of the preceding claims,
**characterised in that**
the receiving apparatus (1) has a cartridge chamber (9) that is open on one side comprising two equidistantly and contour-conformingly aligned guide slots (10, 11) in each of which a corresponding guide shoe (12, 13) of the slide (5) is guided.

4. Receiving apparatus according to any of the preceding claims,
**characterised in that**
the slide (5) has an adjustment surface (14) which is formed on its side facing the cartridge (3), which surface, when the slide (5) is inserted into the receiving apparatus (1), rests on a corresponding support surface (15) which is aligned so as to be complementary to the adjustment surface (14) of the cartridge (3).

5. Receiving apparatus according to claim 4,
**characterised in that**
the adjustment surface (14), viewed in the cross section, has an inclination to the horizontal and encloses an angle together with the horizontal which is less than 90°.

6. Receiving apparatus according to claim 2 or according to any of claims 3 to 5 if dependent on claim 2,
**characterised in that**
the water inlet nozzle (6) and the maintenance product discharge nozzle (7) are integral components of a cover element (16) forming the upper end of the cartridge (3).

7. Receiving apparatus according to any of the preceding claims, wherein a cartridge (3) is provided, and wherein the cartridge (3) has at least one ridge (17) which can be inserted into a guide contour (18) which is present in the slide (5).

8. Receiving apparatus according to claim 7,
**characterised in that**
the ridge (17) is formed on the skirt surface or on the cover element (16) of the cartridge (3).

9. Receiving apparatus according to claim 3 or according to any of claims 4 to 8 if dependent on claim 3, wherein a cartridge (3) is provided and wherein the cartridge (3) has a base (19) which at least in part forms a sliding guide with the inner skirt surface (20) of the cartridge chamber (9).

10. Receiving apparatus according to any of the preceding claims, wherein a cartridge (3) is provided, and wherein the cartridge (3) has a handle (21) on its side opposite the direction of insertion in the receiving apparatus (1).

11. Receiving apparatus according to any of the preceding claims, wherein a cartridge (3) is provided, and wherein the cartridge (3) has a symbol (22) which symbolises the correct insertion movement of the cartridge (3) in the receiving apparatus (1) on the side of the cartridge which is opposite the direction of insertion in the receiving apparatus (1).

12. Receiving apparatus according to claim 2 or according to any of claims 3 to 11 if dependent on claim 2,
**characterised in that**
a detachable closure (23, 24) for the water inlet nozzle (6) and the maintenance product discharge nozzle (7) is arranged or integrally formed on the side of the cartridge (1) which is opposite the direction of insertion in the receiving apparatus (1).

13. Receiving apparatus according to claim 12,
**characterised in that**
the closures (23, 24) are designed as a structural unit.

14. Receiving apparatus according to any of the preceding claims, wherein a cartridge (3) is provided, and wherein the cartridge (3) is designed overall as a disposable product.

15. Receiving apparatus according to claim 2 or according to any of claims 3 to 14 if dependent on claim 2,
**characterised in that**
the coupling device (2), viewed in the direction of flow, has at least one one-way valve in front of the water inlet nozzle (6) or behind the maintenance product discharge nozzle (7) in each case and/or the cartridge (3), viewed in the direction of flow, has at least one one-way valve in or behind the water inlet nozzle (6) or in front of or in the maintenance product discharge nozzle (7) in each case.

16. Beverage machine comprising a receiving apparatus according to any of the preceding claims,
**characterised in that**
the beverage machine (4) has a flow line system for preparing a mixed beverage or an infusion beverage.

17. Method for releasably fixing a cartridge in a receiving apparatus according to any of the preceding claims 1 to 15 in a beverage machine according to claim 16,
**characterised by** the method steps of:
- pulling out a slide (5) originally inserted into the receiving apparatus (1) and guided in a slidingly movable manner in the receiving apparatus (1) up to an end stop,
- introducing the cartridge (3) into a cartridge chamber (9) which is present within the receiving apparatus (1),
- vertically moving the cartridge (3) so that a water inlet nozzle (6) which is present on the cartridge (3) and a maintenance product discharge nozzle (7) are inserted precisely into a coupling device (2),
- inserting the slide (5) in the direction of the cartridge (3).

18. Method according to claim 17,
**characterised in that**
the slide (5) is pushed into the receiving apparatus (1) until an adjustment surface (14) which is present on the slide (5) has positioned the cartridge (3) in its end position by resting on a support surface (15) of the cartridge (3) that extends in a complementary manner to the adjustment surface (14).

## Revendications

1. Dispositif de réception (1) comportant un appareil d'accouplement (2) pour une cartouche (3), dont la fonction est de distribuer par portion un agent permettant d'entretenir le système de conduite d'écoulement utilisé pour préparer des boissons dans un distributeur automatique de boissons (4), la cartouche (3) pouvant être insérée dans l'appareil d'accouplement (2) de manière étanche aux liquides par rapport à l'environnement, **caractérisé en ce**
**qu'**un coulisseau (5) positionnant la cartouche (3) est disposé dans le dispositif de réception (1), peut être inséré dans le dispositif de réception (1) de manière mobile le long d'un contour de coulissement (8) correspondant, et est conçu pour positionner et fixer la cartouche (3) insérée dans l'appareil d'accouplement (2) dans le dispositif de réception (1), et ainsi intercepter le poids de la cartouche (3) agissant sur l'appareil d'accouplement (2), le coulisseau (5) présentant un contour de guidage (18) qui peut coulisser sous des nervures (17) correspondantes de la cartouche (3).

2. Dispositif de réception selon la revendication 1, dans lequel une cartouche (3) est prévue, et dans lequel la cartouche (3) présente un raccord d'entrée d'eau (6) et un raccord d'évacuation d'agent d'entretien (7), lesquels peuvent être insérés précisément dans l'appareil d'accouplement (2), de sorte que la cartouche (3) peut être accouplée au système de conduite d'écoulement d'une manière conductrice d'écoulement.

3. Dispositif de réception selon l'une des revendications précédentes précitées,
**caractérisé en ce**
**que** le dispositif de réception (1) présente une chambre de cartouche (9) ouverte d'un côté et comportant deux fentes de guidage (10, 11) équidistantes et conformes au contour, dans lesquelles respectivement un patin de coulissement (12, 13) correspondant du coulisseau (5) est guidé.

4. Dispositif de réception selon l'une des revendications précédentes précitées,
**caractérisé en ce**
**que** le coulisseau (5) présente une surface de réglage (14) qui est formée sur sa face tournée vers la cartouche (3) et qui, lorsque le coulisseau (5) est inséré dans le dispositif de réception (1), repose sur une surface d'appui (15) de la cartouche (3) correspondante et complémentaire à la surface de réglage (14).

5. Dispositif de réception selon la revendication 4,
**caractérisé en ce**
**que** la surface de réglage (14), vue en section transversale, présente une inclinaison par rapport à l'horizontale et forme, avec l'horizontale, un angle inférieur à 90°.

6. Dispositif de réception selon la revendication 2 ou selon l'une des revendications 3 à 5 lorsqu'elle dépend de la revendication 2,
**caractérisé en ce**
**que** le raccord d'arrivée d'eau (6) et le raccord d'évacuation d'agent d'entretien (7) font partie intégrante d'un élément de recouvrement (16) formant l'extrémité supérieure de la cartouche (3).

7. Dispositif de réception selon l'une des revendications précédentes précitées, dans lequel une cartouche (3) est prévue, et dans lequel la cartouche (3) présente au moins une nervure (17) qui peut être insérée dans un contour de guidage (18) présent dans le coulisseau (5).

8. Dispositif de réception selon la revendication 7,
**caractérisé en ce**
**que** la nervure (17) est formée sur la surface latérale ou sur l'élément de recouvrement (16) de la cartouche (3).

9. Dispositif de réception selon la revendication 3 ou selon l'une des revendications 4 à 8 lorsqu'elle dépend de la revendication 3, dans lequel une cartouche (3) est prévue et dans lequel la cartouche (3) présente un fond (19) qui forme, au moins partiellement avec la surface latérale intérieure (20) de la chambre de cartouche (9), un guide de coulissement.

10. Dispositif de réception selon l'une des revendications précédentes précitées, dans lequel une cartouche (3) est prévue, et dans lequel la cartouche (3) présente une poignée (21) sur sa face opposée au sens d'insertion dans le dispositif de réception (1).

11. Dispositif de réception selon l'une des revendications précédentes précitées, dans lequel une cartouche (3) est prévue, et dans lequel la cartouche (3) présente un symbole (22) symbolisant le mouvement d'insertion correct de la cartouche (3) dans le dispositif de réception (1) sur sa face opposée au sens d'insertion dans le dispositif de réception (1).

12. Dispositif de réception selon la revendication 2 ou selon l'une des revendications 3 à 11 lorsqu'elle dépend de la revendication 2,
**caractérisé en ce**
**qu'**une fermeture amovible (23, 24) pour le raccord d'arrivée d'eau (6) et le raccord d'évacuation d'agent d'entretien (7) est disposée ou moulée sur la face de la cartouche (1) opposée au sens d'insertion dans le dispositif de réception (1).

13. Dispositif de réception selon la revendication 12,
**caractérisé en ce**
**que** les fermetures (23, 24) sont réalisées sous forme d'unité structurelle.

14. Dispositif de réception selon l'une des revendications précédentes précitées, dans lequel une cartouche (3) est prévue, et dans lequel la cartouche (3) est conçue comme un article jetable dans son ensemble.

15. Dispositif de réception selon la revendication 2 ou selon l'une des revendications 3 à 14 lorsqu'elle dépend de la revendication 2,
**caractérisé en ce**
**que** l'appareil d'accouplement (2), vu dans le sens d'écoulement, présente respectivement au moins un clapet unidirectionnel avant le raccord d'arrivée d'eau (6) ou après le raccord d'évacuation d'agent d'entretien (7) et/ou la cartouche (3), vue dans le sens d'écoulement, présente respectivement au moins un clapet unidirectionnel dans ou après le raccord d'arrivée d'eau (6) ou avant ou dans le raccord d'évacuation d'agent d'entretien (7).

16. Distributeur automatique de boissons comportant un dispositif de réception selon l'une des revendications précédentes précitées,
**caractérisé en ce**
**que** le distributeur automatique de boissons (4) présente un système de conduite d'écoulement pour la préparation d'une boisson mélangée ou d'une boisson infusée.

17. Procédé permettant la fixation amovible d'une cartouche dans un dispositif de réception selon l'une des revendications précédentes précitées 1 à 15 dans un distributeur automatique de boissons selon la revendication 16,
**caractérisé par** les étapes de procédé :
- d'extraction d'un coulisseau (5) inséré à l'origine dans le dispositif de réception (1) et guidé de manière coulissante et mobile dans le dispositif de réception (1) jusqu'à une butée de fin,
- d'introduction de la cartouche (3) dans une chambre de cartouche (9) présente à l'intérieur du dispositif de réception (1),
- de mouvement vertical de la cartouche (3), de sorte qu'un raccord d'entrée d'eau (6) présent sur la cartouche (3) et un raccord d'évacuation d'agent d'entretien (7) sont insérés précisément dans un appareil d'accouplement (2),
- d'insertion du coulisseau (5) en direction de la cartouche (3).

18. Procédé selon la revendication 17,
**caractérisé en ce**
**que** le coulisseau (5) est poussé dans le dispositif de réception (1), dans la mesure nécessaire, jusqu'à ce qu'une surface de réglage (14), présente sur le coulisseau (5), ait positionnée la cartouche (3) dans sa position finale par appui sur une surface d'appui (15) de la cartouche (3) s'étendant de manière complémentaire à la surface de réglage (14).
